# EUROPÄISCHE PATENTSCHRIFT

(11) **EP 0 329 596 B1**
(45) Veröffentlichungstag und Bekanntmachung des Hinweises auf die Patenterteilung: **11.08.1993**
(21) Anmeldenummer: 89730027.3
(22) Anmeldetag: 07.02.1989
(51) Int. Cl.: B41J 17/32, H04N 1/46, B41J 35/18

(54) **Bildaufzeichnungsverfahren**
Image recorder
Appareil d'enregistrement d'images

(30) Priorität: 17.02.1988 DE 3805367
(43) Veröffentlichungstag der Anmeldung: 23.08.1989
(73) Patentinhaber: SIEMENS AKTIENGESELLSCHAFT, 80333 München (DE)
(72) Erfinder: Kardinal, Hans-Joachim, D-1000 Berlin 27 (DE); Lehmann, Herbert, D-1000 Berlin 49 (DE)

(56) Entgegenhaltungen:
- DE-A- 3 431 968
- US-A- 4 573 059
- PATENT ABSTRACTS OF JAPAN, Band 10, no. 37 (M-453)[2094], 14. February 1986, page 49 M 453; JP-A-60 190 369 (SUWA SEIKOSHA K.K.) 27-09-1985
- PATENT ABSTRACTS OF JAPAN, Band 10, Nr. 216 (M-502)[2272], 29. Juli 1986, Seite 120 M 502; JP-A-61 54 962 (SHINKO ELECTRIC CO., LTD) 19-03-1986
- PATENT ABSTRACTS OF JAPAN, Band 11, Nr. 191 (M-600)[2638], 19. Juni 1987, Seite 7 M 600; JP-A-62 16 177 (SHINKO ELECTRIC CO., LTD) 24-01-1987

## Beschreibung

Die Erfindung betrifft ein Bildaufzeichnungsverfahren, bei dem ein farbig zu bedruckendes Aufzeichnungsblatt von einem Blattvorrat kommend an eine Druckwalze herangeführt wird, an dieser anliegend unter Zwischenlage eines ersten von mehreren unterschiedlichen Farbabschnitten eines Farbbandes an einem Aufzeichnungskopf vorbeigeführt wird und zum Bedrucken mit weiteren Farben durch einen Blattumlaufkanal jedesmal erneut an die Druckwalze herangeführt wird, wobei das Aufzeichnungsblatt jedesmal unter Zwischenlage eines anderen Farbabschnittes des Farbbandes an dem Aufzeichnungskopf vorbeigeführt wird.

Es ist bekannt, zum mehrfarbigen Bedrucken eines Aufzeichnungsblattes verschiedenfarbige Teilbilder auf dem Aufzeichnungsblatt übereinander zu drucken, indem dieses nacheinander mit unterschiedlichen Farbabschnitten eines Farbbandes in Deckung gebracht wird und jedesmal an einer Druckwalze anliegend an einem Aufzeichnungskopf vorbeigeführt wird. Die Aufzeichnung der Teilbilder erfolgt dabei entsprechend der Anordnung der Farbabschnitte des Farbbandes in der Farbreihenfolge Gelb, Magenta, Cyan und ggf. zusätzlich Schwarz, wenn dadurch eine Verbesserung des durch Übereinanderdrucken von Gelb, Magenta und Cyan erreichten Schwärzungsgrades erreicht werden soll.

Zum Übereinanderdrucken der Teilbilder ist beispielsweise aus der DE-OS 35 04 029 bekannt, nach jedem Druck eines Teilbildes das Aufzeichnungsblatt durch Umkehrung der Drehrichtung der Druckwalze bei abgehobenem Aufzeichnungskopf in eine Ausgangsposition zurückzufördern, von wo aus das Aufzeichnungsblatt zur Erzeugung des nächsten Teilbildes wieder an den Aufzeichnungskopf herangeführt wird.

Bei einem aus der JP-A 61-54962 bekannten Verfahren wird die Druckgeschwindigkeit bei der Ausgabe eines aus zwei Teilbereichen zusammengesetzten Bildes dadurch erhöht, daß der eine, nur Buchstaben aufweisende Teilbereich mit schwarzem Farbband und der andere, nur mehrfarbige aufweisende Figuren Teilbereich des Bildes durch Farbmischung der Farben Gelb, Magenta und Cyan erzeugt wird. Als Unterscheidungskriterium der in den jeweiligen Teilbildbereichen auszugebenen Bildbestandteile dient das Datenformat, mit denen die die Bestandteile repräsentierenden Informationen an die Aufzeichnungseinrichtung übertragen werden.

Eine höhere Druckgeschwindigkeit wird entsprechend einem aus der JP-A 60-190369 bekannten Verfahren, von dem die vorliegende Erfindung ausgeht, dadurch erreicht, daß das von einem Blattvorrat kommend an die Druckwalze geführte Aufzeichnungsblatt nach der Aufzeichnung des ersten Teilbildes in einem Blattumlaufkanal schleifenförmig wieder an die Druckwalze und den Aufzeichnungskopf zur Erzeugung des nächsten Teilbildes herangeführt wird; der Umlauf des Aufzeichnungsblattes in dem Blattumlaufkanal wiederholt sich beim Drucken jedes folgenden Teilbildes bis zum Druck des letzten Teilbildes, nach dem das Aufzeichnungsblatt über eine Weiche auf eine Blattablage ausgeschleust wird.

Die Positionsgenauigkeit der verschiedenen Teilbilder hängt dabei von der jeweiligen Lage des Aufzeichnungsblattes in bezug auf den Aufzeichnungskopf ab. Der Erfindung liegt die Aufgabe zugrunde, ohne zusätzlichen konstruktiven Aufwand die Farbwiedergabe im Hinblick auf mögliche Deckungsungenauigkeiten der Teilbilder zu verbessern.

Gemäß der Erfindung wird diese Aufgabe dadurch gelöst, daß bei dem Bildaufzeichnungsverfahren der eingangs angegebenen Art auf dem von dem Blattvorrat kommenden Aufzeichnungsblatt zuerst sämtliche mit der Farbe Schwarz aufzuzeichnenden Bestandteile des Bildes erzeugt werden und daß anschließend auf dem dann jeweils aus dem Blattumlaufkanal kommenden Aufzeichnungsblatt die jeweils mit den weiteren Farben aufzuzeichnenden Bestandteile des Bildes erzeugt werden. In der Regel handelt es sich bei den weiteren Farbem um die Farben Gelb, Magenta und Cyan, mit denen in bekannter Weise durch Übereinanderdrucken alle verschiedenen Farbeindrücke erzeugt werden können.

Der wesentliche Vorteil des erfindungsgemäßen Verfahrens besteht darin, daß die Aufzeichnung der den Farbeindruck eines Bildes bestimmenden Teilbilder mit den Grundfarben Gelb, Magenta und Cyan in Abhängigkeit von jeweils übereinstimmenden Transportbedingungen für die Zuführung des Aufzeichnungsblattes an die Druckwalze erfolgt, so daß eine positionsgenaue Überlagerung dieser die Farbwiedergabe bestimmenden Teilbilder nahezu ohne Versatz erfolgt. Die vergleichsweise größten Lagetoleranzen des Aufzeichnungsblattes in bezug auf den Aufzeichnungskopf treten nämlich beim Transport des Aufzeichnungsblattes von dem Blattvorrat zur Druckwalze auf. Dagegen wird bei der wiederholten Zuführung des Aufzeichnungsblattes durch den Blattumlaufkanal an die Druckwalze heran aufgrund der jedesmal gleichen Förderbedingungen, wie jedesmal derselbe Förderweg in Form des Blattumlaufkanals und die gleichmäßige Umlaufgeschwindigkeit, eine vergleichsweise genauere Ausrichtung des Aufzeichnungsblattes in bezug auf den Aufzeichnungskopf erreicht. Im Vergleich zu den die Farbwiedergabe bestimmenden Teilbildern erweisen sich geringfügige Lageabweichungen des mit der Farbe Schwarz gedruckten Teilbildes zu dem aus den farbigen Teilbildern bestehenden Farbauszug als wesentlich weniger störend. Wird nämlich die Farbe Schwarz zur Steigerung des Kontrastes in dem Farbauszug gedruckt, so geschieht dies ohnehin an den Stellen, an denen die Farben Gelb, Magenta und Cyan zur Erzeugung eines Schwarzwertes übereinandergedruckt werden. Wird dagegen mit der Farbe Schwarz ein Text gedruckt, so sind geringfügige Lageabweichungen zwischen dem schwarzen Text und den übrigen farbigen Bildanteilen unerheblich.

Wie oben bereits ausgeführt, wird aufgrund der jeweils gleichen Förderbedingungen für das Aufzeichnungsblatt eine deckungsgenaue Überlagerung der farbigen Teilbilder ermöglicht. Bei zusätzlichen Textanteilen, die ausschließlich mit Schwarz gedruckt werden, erweist sich ein auf der größeren Lagetoleranz des Aufzeichnungsblattes bei seiner Förderung von dem Blattvorrat zur Druckwalze beruhender möglicher Versatz des Textes in bezug auf die farbigen Bildanteile als unerheblich, weil in der Regel der Text und die farbigen Bildanteile voneinander unabhängige Teilinformationen des gesamten zu druckenden Bildes darstellen und daher geringfügige Lageabweichungen des Textes und der farbigen Bildanteile zueinander als nicht störend empfunden werden.

Im Hinblick auf die Reihenfolge, mit der die Teilbilder bei dem erfindungsgemäßen Bildaufzeichnungsverfahren gedruckt werden, wird in vorteilhafter Weise ein Farbband verwendet, bei dem vom Anfang des Farbbandes an der jeweils erste der in periodischer Reihenfolge angeordneten mehreren Farbbandabschnitte die Farbe Schwarz trägt. Die Verwendung herkömmlicher Farbbänder mit der Farbreihenfolge Gelb, Magenta, Cyan und Schwarz im Rahmen des erfindungsgemäßen Bildaufzeichnungsverfahrens hätte dagegen zur Folge, daß die ersten Farbabschnitte des Farbbandes mit den Farben Gelb, Magenta und Cyan unbenutzt blieben.

Zur Erläuterung der Erfindung wird im folgenden auf die Figuren der Zeichnung Bezug genommen. Im einzelnen zeigen
- Figur 1: ausschnittsweise eine Bildaufzeichnungsvorrichtung zur Durchführung des erfindungsgemäßen Verfahrens und
- Figur 2: ein in dieser Bildaufzeichnungsvorrichtung verwendetes Farbband.

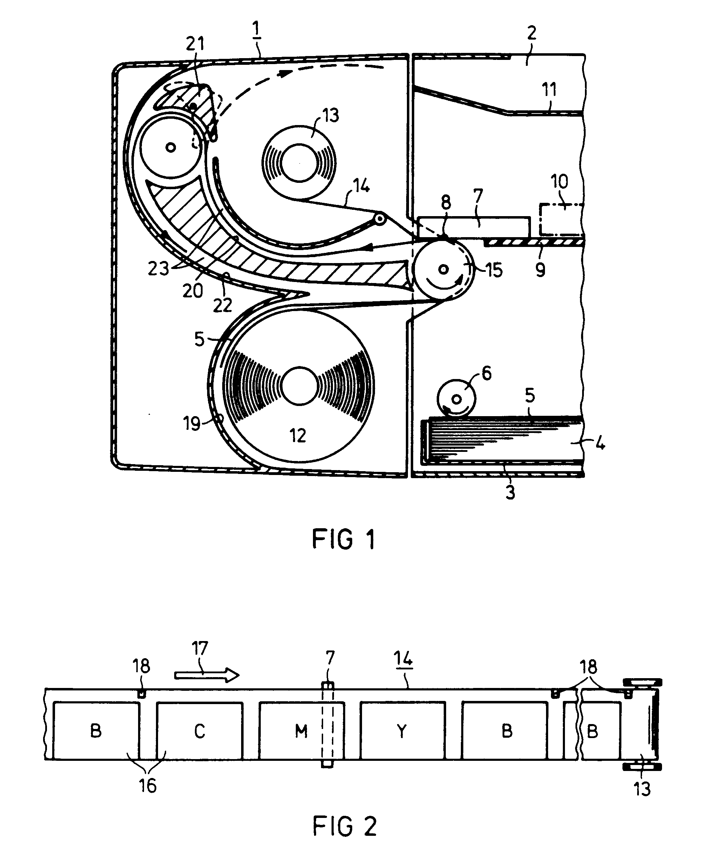

Figur 1 zeigt einen Thermotransferdrucker als bevorzugtes Ausführungsbeispiel einer Bildaufzeichnungsvorrichtung zur Aufzeichnung von Bildinformationen auf einem Aufzeichnungsblatt nach dem erfindungsgemäßen Verfahren. Ein derartiger Thermotransferdrucker ist in der älteren deutschen Patentanmeldung mit dem amtlichen Aktenzeichen P 37 21 231.1 beschrieben. Der hier gezeigte Thermotransferdrucker besteht im wesentlichen aus einem hier nur teilweise sichtbaren Gehäuse 1 und einer daran gehaltenen Farbbandkassette 2. In dem Gehäuse 1 ist in einer untersten Ebene eine Blattvorratskassette 3 mit einem Blattvorrat 4 an einzeln zu bedruckenden Aufzeichnungsblättern 5 angeordnet. Eine antreibbare Blattförderrolle 6 dient zur Überführung des jeweils obersten Aufzeichnungsblattes 5 des Blattvorrates 4 in die Farbbandkassette 2 hinein. In einer mittleren Ebene des Gehäuses 1 ist ein Aufzeichnungskopf 7 in Form eines sich senkrecht zur Zeichenebene erstreckenden zeilenförmigen Thermodruckkopfes mit einer Vielzahl einzeln ansteuerbarer Heizelemente 8 an einer Leiterplatte 9 gehalten; die Leiterplatte 9 trägt ferner eine Steuereinrichtung 10 für den gesamten Thermotransferdrucker. In der obersten Ebene weist das Gehäuse 1 eine Blattablage 11 für vollständig bedruckte Aufzeichnungsblätter 5 auf.

Die Farbbandkassette 2 beinhaltet zwei übereinanderliegende Wickelspulen 12 und 13, auf denen ein Farbband 14 bevorratet ist. Das Farbband 14 ist um eine zwischen den Wickelspulen 12 und 13 angeordnete und dem Thermodruckkopf 7 unmittelbar gegenüberliegende Druckwalze 15 geführt. Das Farbband 14, von dem in Figur 2 ein Abschnitt dargestellt ist, weist in Längsausdehnung verschiedene Farbabschnitte 16 mit der sich periodisch wiederholenden Farbreihenfolge Schwarz (B), Gelb (Y), Magenta (M) und Cyan (C) auf. Jeder Farbabschnitt 16 hat etwa das Format des zu bedruckenden Aufzeichnungsblattes 5. Mit 17 ist die Transportrichtung des Farbbandes 14 in bezug auf den hier strichliert angedeuteten Thermodruckkopf 7 bezeichnet. An seinem Rand trägt das Farbband 14 durch den Thermotransferdrucker optisch lesbare Marken 18 zur Erkennung der Lage der einzelnen Farbabschnitte 16 in bezug auf den Thermodruckkopf 7.

Wie Figur 1 ferner zeigt, enthält die Farbbandkassette 2 ein Leitteil 19, das sich bogenförmig um die Wickelspule 12 erstreckt und dazu dient, das von dem Blattvorrat 4 kommende unbedruckte Aufzeichnungsblatt 5 an die Druckwalze 15 heranzuführen. Ein weiteres Leitteil 20 erstreckt sich um die Wickelspule 13 herum und dient dazu, das von der Druckwalze 15 kommende vollständig bedruckte Aufzeichnungsblatt 5 aus der Farbbandkassette 2 heraus auf die Blattablage 11 zu leiten. Im oberen Verlauf des weiteren Leitteils 20 ist eine über die Steuereinrichtung 10 ansteuerbare Weiche 21 angeordnet, die wahlweise das an dem Leitteil 20 entlanggeführte Aufzeichnungsblatt 5 in Richtung auf die Blattablage 11 überführt (gestrichelt gezeichnete Weichenstellung) oder auf ein drittes Leitteil 22 umlenkt, das das Aufzeichnungsblatt 5 zur Druckwalze 15 zurückführt (mit ausgezogenen Linien gezeigte Weichenstellung). Die beiden Leitteile 20 und 22 bilden dabei Teilabschnitte eines Blattumlaufkanals 23, der bei der mit ausgezogenen Linien gezeigten Weichenstellung eine schleifenförmige Rückführung des von der Druckwalze 15 kommenden Aufzeichnungsblattes an die Druckwalze 15 zurück ermöglicht.

Ein mehrfarbig zu bedruckendes Aufzeichnungsblatt 5 wird von dem Blattvorrat 4 mittels der Blattförderrolle 6 in die Farbbandkassette 2 hinein überführt, wo es an dem Leitteil 19 entlang an die Druckwalze 15 herangeführt wird. Dort wird das Aufzeichnungsblatt 5 gemeinsam mit einem die Farbe Schwarz (B) aufweisenden Farbabschnitt 16 des Farbbandes 14 an dem Thermodruckkopf 7 vorbeigeführt und entsprechend der Ansteuerung der Heizelemente 8 mit einem schwarzweißen Teilbild bedruckt. Das die Druckwalze 15 verlassende Aufzeichnungsblatt 5 wird durch Steuerung der Weiche 21 in die mit ausgezogenen Linien dargestellte Weichenstellung durch den Blattumlaufkanal 21 hindurch an die Druckwalze 15 zurückgeführt, wo es in Deckung mit einem die Farbe Gelb (Y) aufweisenden Farbabschnitt 16 des Farbbandes 14 gerät und mit dieser Farbe nach Maßgabe der Ansteuerung der Heizelemente 8 des Thermodruckkopfes 7 bedruckt wird. Der gleiche Vorgang wiederholt sich für die Farben Magenta (M) und Cyan (C); danach wird die Weiche 21 in die strichliert gezeigte Weichenstellung gesteuert und das fertig bedruckte Aufzeichnungsblatt 5 auf die Blattablage 11 gefördert.

Mit jedem Vorbeiführen des Aufzeichnungsblattes 5 an dem Thermodruckkopf 7 wird das Aufzeichnungsblatt 5 mit einem Teilbild in der Reihenfolge der Farben Schwarz (B), Gelb (Y), Magenta (M) und Cyan (C) bedruckt. Dabei ist es wesentlich, daß das Aufzeichnungsblatt 5 von dem Blattvorrat 4 kommend zunächst mit der Farbe Schwarz (B) bedruckt wird und erst anschließend nach jeweils einem Umlauf in dem Blattumlaufkanal 23 mit den übrigen Farben Gelb (G), Magenta (M) und Cyan (C) bedruckt wird. Während nämlich das Aufzeichnungsblatt 5 von dem Blattvorrat 4 kommend noch vergleichsweise große Lagetoleranzen bezüglich des Thermodruckkopfes 7 aufweist, ist dagegen die Lage des Aufzeichnungsblattes 5 bei den nachfolgenden gleichmäßigen Umläufen in dem Blattumlaufkanal 23 in bezug auf den Thermodruckkopf 7 vergleichsweise stabil und genau. Dadurch wird erreicht, daß die farbigen Teilbilder in den Farben Gelb (G), Magenta (M) und Cyan (C) relativ genau übereinander gedruckt werden und somit eine sehr gute Farbwiedergabe ermöglichen. Im Unterschied zu den farbigen Teilbildern können für schwarzweiße Teilbilder großzügigere Lagetoleranzen gelten. Wird nämlich mit der Farbe Schwarz beispielsweise ein Text gedruckt, so sind geringfügige Lageabweichungen zwischen dem schwarzgedruckten Text und den farbigen Bildanteilen in der Regel unerheblich. Für den Fall, daß die Farbe Schwarz zur Steigerung des Kontrastes in dem Farbbild gedruckt werden soll, geschieht dies ohnehin an den Stellen, an denen die Farben Gelb, Magenta und Cyan zur Erzeugung eines Schwarzwertes übereinandergedruckt werden, so daß im Falle eines Versatzes die Versatzbilder jeweils schwarz und nicht etwa in störender Weise unterschiedlich farbig wären.

## Patentansprüche

1. Bildaufzeichnungsverfahren, bei dem ein farbig zu bedruckendes Aufzeichnungsblatt (5) von einem Blattvorrat (4) kommend an eine Druckwalze (15) herangeführt wird, an dieser anliegend unter Zwischenlage eines ersten von mehreren unterschiedlichen Farbabschnitten (16) eines Farbbandes (15) an einem Aufzeichnungskopf (7) vorbeigeführt wird und zum Bedrucken mit weiteren Farben durch einen Blattumlaufkanal (23) jedesmal erneut an die Druckwalze (15) herangeführt wird, wobei das Aufzeichnungsblatt (14) jedesmal unter Zwischenlage eines anderen Farbabschnittes (16) des Farbbandes (14) an dem Aufzeichnungskopf (7) vorbeigeführt wird,
**dadurch gekennzeichnet,** daß
auf dem von dem Blattvorrat (4) kommenden Aufzeichnungsblatt (5) zuerst sämtliche mit der Farbe Schwarz (B) aufzuzeichnenden Bestandteile des Bildes erzeugt werden und daß anschließend auf dem dann jeweils aus dem Blattumlaufkanal (23) kommenden Aufzeichnungsblatt (5) die jeweils mit den weiteren Farben (Y, M, C) aufzuzeichnenden Bestandteile des Bildes erzeugt werden.

2. Bildaufzeichnungsverfahren nach Anspruch 1,
**dadurch gekennzeichnet,** daß
ein Farbband (14) verwendet wird, bei dem vom Anfang des Farbbandes (14) an der jeweils erste der in periodischer Reihenfolge angeordneten mehreren Farbbandabschnitte (16) die Farbe Schwarz (B) trägt.

## Claims

1. Image recording process, in which a recording sheet (5) to be printed in colour is led from a supply of sheets (4) to an impression cylinder (15), bearing against the latter is taken past a recording head (7) with a first of a plurality of different colour sections (16) of an ink ribbon (15) in between and, for printing with further colours, is each time led anew through a sheet circulating channel (23) to the impression cylinder (15), the recording sheet (14) each time being taken past the recording head (7) with a different colour section (16) of the ink ribbon (14) in between, characterised in that first of all all the constituent parts of the image to be recorded with the colour black (B) are produced on the recording sheet (5) coming from the supply of sheets (4) and in that subsequently the constituent parts of the image respectively to be recorded with the further colours (Y, M, C) are produced on the recording sheet (5) then respectively coming out of the sheet circulating channel (23).

2. Image recording process according to Claim 1, characterised in that an ink ribbon (14) is used on which, from the beginning of the ink ribbon (14), the first of the plurality of ink ribbon sections (16) arranged in periodic sequence in each case bears the colour black (B).

## Revendications

1. Procédé d'enregistrement d'images, selon lequel une feuille d'enregistrement (5) devant être imprimée en couleurs est amenée depuis une réserve de feuilles (4) à proximité d'un cylindre d'impression (15), et, en étant appliquée contre ce dernier, est déplacée devant une tête d'enregistrement (7) moyennant l'interposition d'une première de plusieurs sections colorées différentes (16) d'une bande colorée (15), et, pour l'impression avec d'autres couleurs, est à nouveau chaque fois amenée au cylindre d'impression (15), par l'intermédiaire d'un canal (23) de recirculation de la feuille, la feuille d'enregistrement (14) étant déplacée chaque fois, moyennant l'interposition d'une autre section colorée (16) de la bande colorée (14), devant la tête d'enregistrement (7),
caractérisé par le fait que tout d'abord toutes les composantes de l'image, qui doivent être enregistrées avec la couleur noire (B), sont produites sur la feuille d'enregistrement (5) qui arrive de la réserve de feuilles (4) et qu'ensuite les composantes de l'image, qui doivent être enregistrées respectivement avec les autres couleurs (Y, M, C), sont produites sur la feuille d'enregistrement (5) qui arrive respectivement du canal (23) de recirculation des feuilles.

2. Procédé d'enregistrement d'images suivant la revendication 1, caractérisé par le fait qu'on utilise une bande colorée (14), qui porte, dès son début, la couleur noire (B), au niveau de la première section respective faisant partie des différentes sections (16) de la bande colorée, disposées selon une succession périodique.
